(19)

**Europäisches Patentamt**
**European Patent Office**
**Office européen des brevets**

(11) **EP 3 379 865 B1**

(12) **EUROPEAN PATENT SPECIFICATION**

(45) Date of publication and mention
of the grant of the patent:
**20.11.2019 Bulletin 2019/47**

(51) Int Cl.:
***H04W 40/12*** *(2009.01)*

(21) Application number: **17162099.0**

(22) Date of filing: **21.03.2017**

(54) **METHOD FOR SCHEDULING TRANSMISSIONS IN A MESHED WIRELESS NETWORK**

VERFAHREN ZUR PLANUNG VON ÜBERTRAGUNGEN IN EINEM DRAHTLOSEN MESH-NETZWERK

PROCÉDÉ DE PLANIFICATION DES TRANSMISSIONS DANS UN RÉSEAU MAILLÉ SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.09.2018 Bulletin 2018/39**

(73) Proprietor: **Televic Healthcare NV**
**8870 Izegem (BE)**

(72) Inventors:
• **MALIK, Salman**
**B-9000 Gent (BE)**
• **CROMBEZ, Pieter**
**B-8820 Torhout (BE)**

(74) Representative: **Beck, Michaël Andries T.**
**IPLodge bvba**
**Technologielaan 9**
**3001 Heverlee (BE)**

(56) References cited:
**WO-A1-2017/037403      US-A1- 2002 051 425**
**US-A1- 2010 260 131     US-A1- 2011 164 527**
**US-A1- 2015 365 222     US-A1- 2016 021 009**

## Description

### Field of the Invention

The present invention pertains to the field of meshed wireless networks, in particular to algorithms that determine the scheduling of transmissions in such networks.

### Background

The article by Xinzhou Wu et al., "FlashLinQ: A Synchronous Distributed Scheduler for Peer-to-Peer Ad Hoc Networks", Proceedings of the 48th Annual Allerton Conference on Communication, Control, and Computing, October 2010, discloses a distributed mechanism for scheduling links in a peer-to-peer ad hoc network. Links are pre-defined, whereby transmitters are aware of their respective receivers. The goal of the known scheme is to simultaneously schedule as many of these pre-defined links as possible. In multi-hop cases, each hop must be aware of the next hop before link scheduling can take place. Links are assigned priorities, whereby lower priority links yield to higher priority links. It is a disadvantage of this scheme that the prioritization needs to be randomized in the network to achieve fairness in the network over time.

### Summary

It is an object of embodiments of the present invention to overcome some of the disadvantages of the prior art scheduling schemes.

According to the present invention, there is provided a method for forwarding a data packet in a meshed wireless communication network comprising nodes that are only permitted to transmit in accordance with a predetermined transmission schedule such that different sets of transmitter-receiver pairs are active in different time slots, the method comprising at a transmitting node having a set of packets queued for transmission: for each packet of a subset of the set of packets, determining a cost function related to reaching a destination node of the respective packet for a plurality of candidate next hop nodes and next hop transmission slots; assigning packets of the subset of packets to selected time slots and to respective next hop nodes in such a way that a utilization of the medium is maximized and a sum of the cost functions over the assigned packets is minimized; and transmitting the packets in the subset of packets to the respective next hop nodes in the assigned time slots.

It is an advantage of the second aspect of the invention that it applies the inventive insights underlying the first aspect of the invention to a plurality of queued packets, so as to achieve a joint optimization and avoiding starvation of any particular destination.

In an embodiment, the cost function represents the sum of the number of time slots required to reach the respective destination from the respective candidate next hop and the number of time slots that will pass before the packet can be transmitted to the candidate next hop.

It is advantage of this embodiment that it minimizes the load on the network by scheduling the upcoming packets in such a way that they reach their final destination with minimal latency.

According to an aspect of the present invention, there is provided a computer program product comprising code means configured to cause a processor to carry out the steps of the method as described above.

According to an aspect of the present invention, there is provided a wireless network node configured to carry out the steps of the method as described above.

The technical effects and advantages of embodiments of the computer product and the wireless network node according to the present invention correspond, *mutatis mutandis,* to those of the corresponding embodiments of the method according to the present invention.

### Brief Description of the Figures

These and other features and advantages of embodiments of the present invention will now be described in more detail with reference to the accompanying drawings, in which:

-   Figure 1 presents a flow chart of an exemplary method;
-   Figure 2 presents a variant of Figure 1 in which multiple packet transmissions take place within the same time slot;
-   Figure 3 schematically represents a network used to illustrate certain concepts of the present invention;
-   Figure 4 illustrates the protocol followed by receivers allowed to transmit in a given slot, in accordance with an embodiment of the present invention;
-   Figure 5 presents a flow chart of an embodiment of the method according to the present invention;

- Figure 6 shows the schedule a node T derives for packets in its queue based on a table; and
- Figure 7 shows an example of how a node can derive the relevant scheduling and forwarding tables where we consider three nodes in a network.

**Detailed Description of Embodiments**

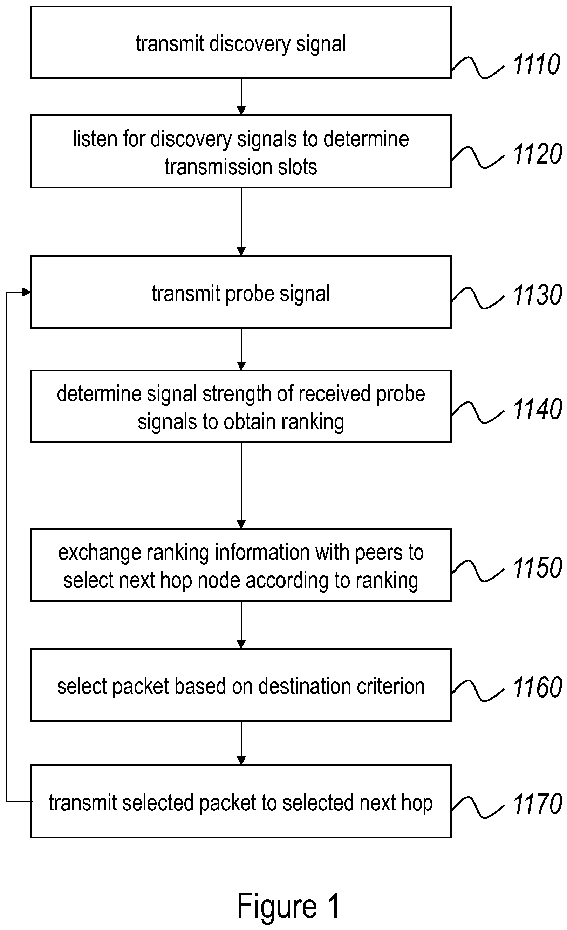

Figure 1 presents a flow chart of an exemplary method for forwarding a data packet in a meshed wireless communication network comprising a plurality of nodes. The nodes are only permitted to transmit in accordance with a predetermined transmission schedule such that different sets of transmitter-receiver pairs are active in different time slots.

In a first set of steps, performed in an initial discovery stage and optionally repeated when necessary, the method comprises determining the predetermined transmission schedule by performing the following steps at each node of the plurality of nodes:

- transmitting a discovery signal **1110;** and
- listening for discovery signals received from other ones of the plurality of nodes **1120.**

In addition, the following steps are performed for the network:

- selecting transmitter-receiver pairs on the basis of a successful detection of discovery signals transmitted by a candidate transmitter to a candidate receiver; and
- establishing the predetermined transmission schedule by assigning different sets of selected transmitter-receiver pairs to different time slots.

In a second set of steps, performed in a periodically repeated scheduling stage, a ranking of the available links is obtained by performing the following steps at each node of the plurality of nodes:

- transmitting a probe signal **1130;** and
- determining **1140** signal strength values of probe signals received from other ones of the plurality of nodes.

The transmitter-receiver pairs are ranked on the basis of the determined signal strength values to determine, for the present time slot, a preferred next hop for the transmitting node in the present time slot.

The method allows the transmitter to become aware of its most optimal receiver in a given timeslot, according to a certain criterion, and hence allows it to optimally schedule its transmissions. Using the information derived in discovery and scheduling phase, nodes derive the most optimal shortest paths to reach their destinations.

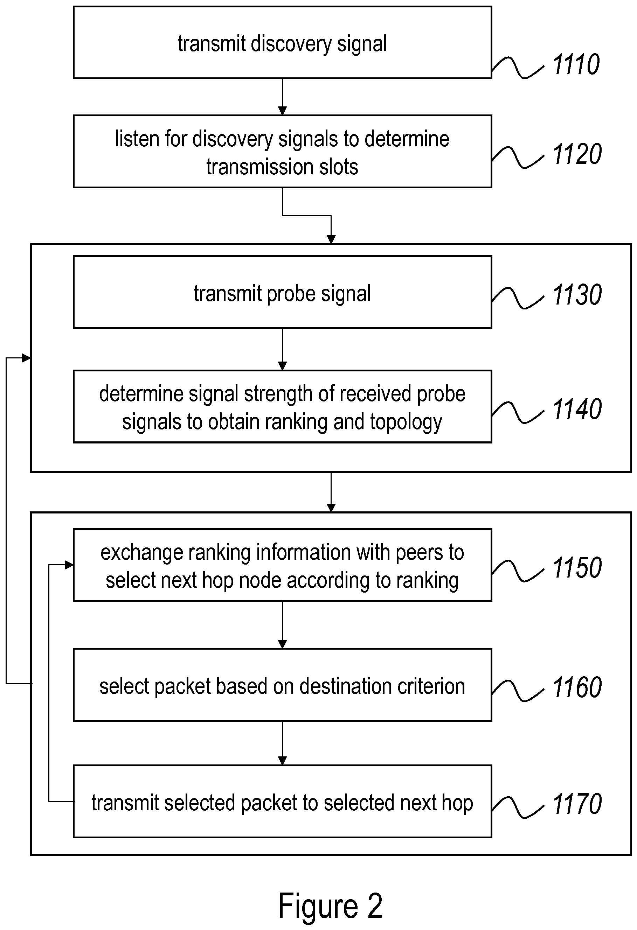

The transmission of the probing signals and the resulting ranking of transmitter-receiver pairs is performed for every time slot. In some cases, a single time slot is consumed for the transmission of a single packet. If the time slot is sufficiently long, multiple packets may be transmitted in the same time slot on the basis of the same ranking obtained by the probing stage for that time slot. Figure 2 presents a variant of Figure 1 in which multiple packet transmissions take place within the same time slot.

In the data exchange stage, the method comprises at a transmitting node having a set of packets queued for transmission:

- selecting **1150** from the nodes that can be reached during the active time slot according to the predetermined transmission schedule, a next hop node according to a ranking; for this purpose, the ranking information is first exchanged between the peers by any suitable protocol, an example of which is provided below;
- selecting **1160** from the set of packets, a packet having a destination for which the selected next hop meets a predetermined destination criterion; and
- transmitting **1170** the selected packet to the selected next hop node.

The predetermined destination criterion may be a proximity criterion. The method may comprise establishing a network topology on the basis of the selected transmitter-receiver pairs, the network topology being used to evaluate the proximity criterion.

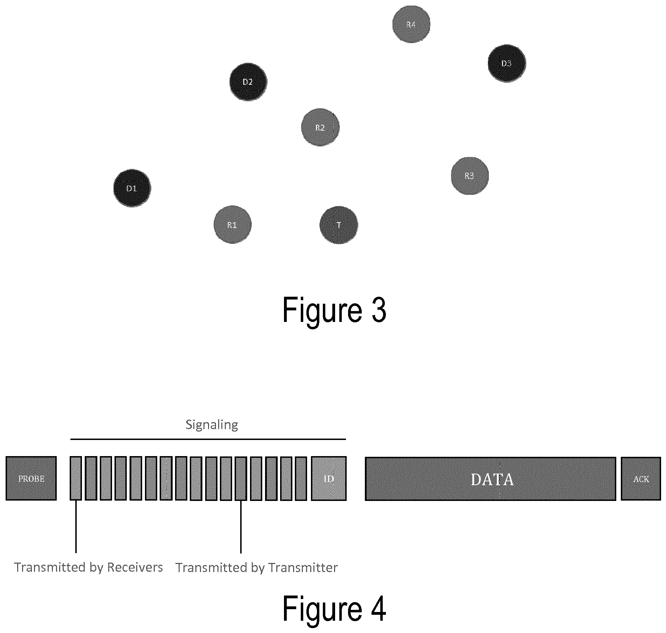

By way of example, consider the network illustrated in Figure 3. At the end of the discovery and scheduling phase, node T derives the following table to reach destinations D1, D2 and D3.

| Destination | Next Hops | |
|---|---|---|
| | 1st Preference | 2nd Preference |
| D1 | R1 | |
| D2 | R2 | |
| D3 | R3 | R2 |

Thus, during data exchange phase, nodes that can transmit in a given slot and their receivers follow the below described protocol, illustrated in Figure 4.

1. The transmitter sends a PROBE
2. This PROBE is followed by a signaling phase during which all receivers of the PROBE transmit their 'rank'
3. The signaling phase consists of two types of mini-slots:

a. In the 1st type, all receivers either transmit a signal or stay silent depending on their rank. This rank is derived on the basis of a particular criteria, e.g., distance, SIR, etc. For example, based on the distance from the transmitter, receivers RX1 and RX2 derive ranks of 1001 and 1101 respectively. If the bit-value is equal to 1, the receiver shall transmit a signal in its mini-slot and if it is 0, it shall stay silent.
b. In the 2nd type, the transmitter repeats what it has detected during the preceding mini-slot and the receivers listen. Some receivers, on detecting a difference in the rank they are following and the rank transmitted by the transmitter, shall seize and will not compete further. This may happen in case of hidden node problem. In the above example, if the transmitter repeats 1101, RX1 shall relinquish.

4. At the end of the signaling phase, the transmitter and all its receivers select the most optimal receiver that shall receive the following DATA.
5. The rank can be padded with a random number to break ties.
6. Depending upon the eventual winner, the transmitter schedules a packet from its transmission queue for which this receiver is the final destination or the most optimal next hop. So in the above example, consider that T is the transmitter. If, in any given time-slot, R1 is the selected next-hop, D1 is the selected destination and T sends its packet for destination D1. Similarly, if R2 is the selected next-hop, D2 and D3 are the selected destinations and T can transmit its packet for D2 or D3. It is also possible that the transmitter includes only a subset of potential destinations, it is interested in, in the PROBE. This restricts the competition in signaling phase to only those potential receivers which have routes to any of the potential destinations in list.

In the case of a dense network, the transmitter can include a unique CDMA code to be used during the signaling phase to protect against interference in the network.

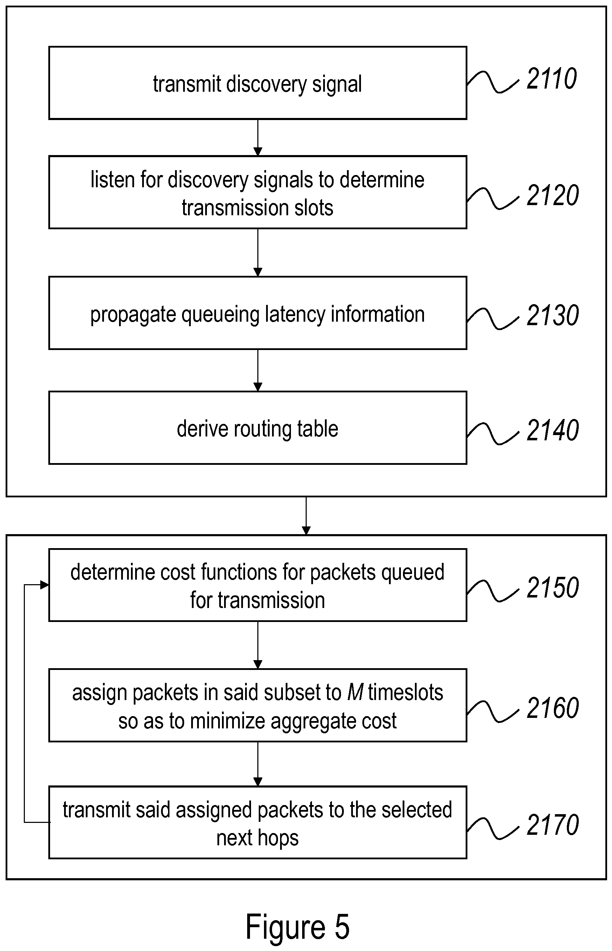

Figure 5 presents a flow chart of an embodiment of the method according to the present invention.

The initial discovery stage, which may optionally be repeated when necessary, corresponds to the discovery stage described above in the context of Figure 1.

Based on the discovered information, the nodes propagate their queueing latencies to neighboring nodes **2130,** allowing these to deriving their own routing tables **2140.**

The method further comprises at a transmitting node having a set of packets queued for transmission:

- for each one of a fixed-sized subset of said set of packets, determining **2150** a cost function related to reaching a destination node of said respective packet for a plurality of candidate next hop nodes and next hop transmission slots;
- assigning **2160** said packets in said subset of packets to selected time slots and to respective next hop nodes in such a way that a sum of said cost function over said subset of packets is minimized; and
- transmitting **2170** said packets in said subset of packets to said respective next hop nodes in said assigned time slots.

The second scheme allows the transmitter to intelligently select the next hop for the packet to be transmitted in a given time slot while minimizing the end-to-end delay. It also allows the nodes to be aware of their TX/RX scheduling hence allowing them to optimize power consumption by scheduling their sleep and active cycles. Nodes derive their routing tables using the information learned during the discovery and scheduling phase.

The routing table at any given node T consists of the following information:

|  | $S_1$ | $S_2$ | $S_3$ | ... | $S_m$ |
|---|---|---|---|---|---|
| $D_1$ | $L_{11}, N_{11}$ | $L_{12}, N_{12}$ | $L_{13}, N_{13}$ | ... | $L_{1m}, N_{1m}$ |
| $D_2$ | $L_{21}, N_{21}$ | $L_{22}, N_{22}$ | $L_{23}, N_{23}$ | ... | $L_{2m}, N_{2m}$ |
| $D_3$ | $L_{31}, N_{31}$ | $L_{32}, N_{32}$ | $L_{33}, N_{33}$ | ... | $L_{3m}, N_{3m}$ |
| ... | ... | ... | ... | ... | ... |
| $D_n$ | $L_{n1}, N_{n1}$ | $L_{n2}, N_{n2}$ | $L_{n3}, N_{n3}$ | ... | $L_{nm}, N_{nm}$ |

Where $L_{nm}$ is the latency to deliver a packet to destination $D_n$ if the node T transmits it during the Timeslot $S_m$ and selects $N_{nm}$ as its next-hop.

The node T uses the following scheduling scheme to transmit packets in its queue.

1) At a given time-slot S, node T has to create a schedule of transmissions over the next M time-slots ($M \geq 1$)

 a. Node T has in its queue packets for destinations D1, D2, D3, ..., Dn

 b. In M time-slots, from S to S+(M-1), node T transmits in X number of time-slots ($X \leq M$)

 c. During these X time-slots, node T can transmit:

  i. X1 ($X1 \leq X$) packets to D1

  ii. X2 ($X2 \leq X$) packets to D2

  iii. X3 ($X3 \leq X$) packets to D3

  iv. ...

  v. Xn ($Xn \leq X$) packets to Dn

 such that ($X1 + X2 + X3 + ... + Xn) \geq X$

 d. Node T sequentially extracts up to X1, X2, X3, ..., Xn packets for destinations D1, D2, D3, ..., Dn from its queue and schedules X of these packets in these M time-slots

 e. Take set Y = P1 U P2 U P3 ... U Pn, where Pi is the set of first Xi packets in the queue for destination i. The criteria for scheduling transmissions of X packets from set Y is to minimize the delay to deliver these packets.

$$min \sum_{y\ in\ Y} \{J + L_{(y[DEST],\ S+J)}\},$$

where:

 ○ *J* is the time-slots in M: 0,..., *M* - 1

 ○ *y[DEST]* is the destination of a packet *y* and

 ○ $L_{y[DEST],S+J}$ is the delay encountered for transmitting a packet for destination *y[DEST]* in time-slot *S + J* and is taken from the routing table shown above

 f. The goal is that node T shall utilize all the time-slots in which it is allowed to transmit while minimizing the delivery delay of scheduled packets

 g. The packets in set Y that are not scheduled for transmission are pushed back to the queue while maintaining the order in which they arrived in node T's queue

h. There is a remote possibility of unfairness in scheduling of packets to certain destinations. This can be easily remedied by using a cumulative weight function calculated during the scheduling step and used during the phase when packets are extracted from the queue (step d)

2)

$$S = S + M$$

3) The above process repeats again.

For example, consider node T has the following table. For clarity, we have included only the delays and not the next-hops.

| | Time-slots | | | | Number of packets that can be transmitted to destination |
|---|---|---|---|---|---|
| **Destination** | S1 | S2 | S3 | S4 | |
| D1 | 4 | 2 | 3 | Infinity | X1 = 3 |
| D2 | Infinity | 3 | 8 | 3 | X2 = 3 |
| D3 | 2 | Infinity | 5 | Infinity | X3 = 2 |

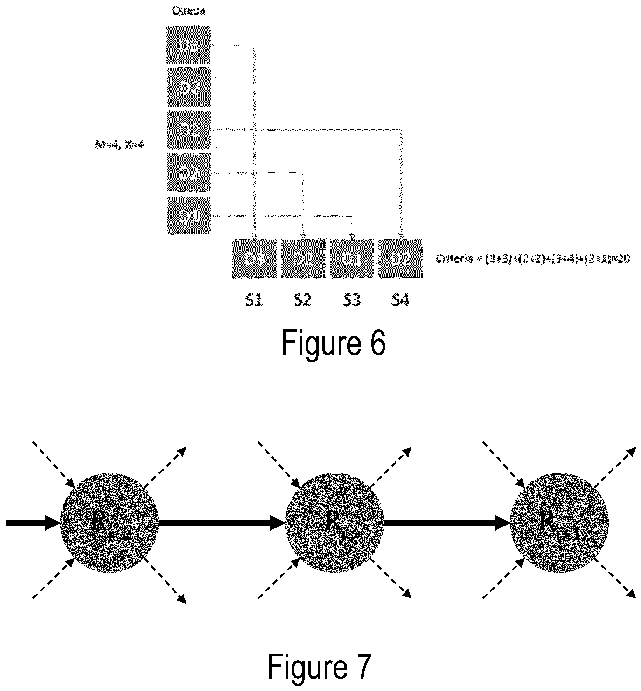

Figure 6 shows the schedule node T derives for packets in its queue based on this table. In this example, the calculated cost, according to the above defined metric, is:

$$(0+2)+(1+3)+(2+3)+(3+3)=17.$$

Note that, any other schedule would not have allowed the use of all available time-slots or the calculated cost would have been higher than the one shown in the figure.
Figure 7 and the following description shows an example of how a node can derive the above tables where we consider three nodes in a network.
The procedure to derive the above routing table consists of two steps.
During the first step, $R_i$ forwards to $R_{i+1}$ a table consisting of timeslots when it can receive from $R_{i-1}$. $R_{i+1}$ uses this information and the information it already contains, about the timeslots when it can receive from $R_i$, to compute the queuing latency in $R_i$ for a packet received from $R_{i-1}$ if it is to be forwarded to $R_{i+1}$.
Following table shows this computation at $R_{i+1}$:

| | $S_1$ | $S_2$ | $S_3$ | $S_4$ | $S_5$ |
|---|---|---|---|---|---|
| **$R_i$** | 0 | RX from $R_{i-1}$ | 0 | 0 | 0 |
| **$R_{i+1}$** | RX from $R_i$ | 0 | 0 | 0 | 0 |
| **Delay** | Infinity | 4 | Infinity | Infinity | Infinity |

The last row in the above shows that if $R_{i-1}$ sends a packet to $R_i$ in timeslot $S_2$, it shall wait in the transmission queue of $R_i$ for 4 timeslots before it could be forwarded to $R_{i+1}$. During the second step, $R_{i+1}$ informs $R_i$ about its queueing delay for packet from $R_{i-1}$ to $R_{i+1}$ and the timeslots when it can receive from $R_i$.
In the route discovery process, routing packets flow from the source to the destination during the request phase. On receiving these packets, the destination selects the most optimal metric which in this case will be the expected delay per timeslot, when the source could forward it a packet, and the best last hop for each of those timeslots. During the response phase, packets flow from the destination to the source. Including the above described information in packets in both directions allow all nodes in multiple paths between source and destination to derive their routing tables to reach the destination. Note that the information exchanged in these steps has repetitive patterns and can be compressed with Huffman coding if required. Moreover, other information e.g. packet-error-rate could also be included in deriving the routing tables.

The steps of the methods described hereinabove may be carried out by a wireless network node having a scheduling engine implemented in dedicated hardware (e.g., ASIC), configurable hardware (e.g., FPGA), programmable components (e.g., a DSP or general purpose processor with appropriate software), or any combination thereof. The same component may also include other functions. The present invention also pertains to a computer program product, optionally stored on a computer-readable medium, comprising code means adapted to cause a processor in a system with appropriate network interfaces to perform the functions of the wireless network node as described above.

While the invention has been described hereinabove with reference to specific embodiments, this is done to illustrate and not to limit the invention, the scope of which is defined by the accompanying claims. The skilled person will readily appreciate that different combinations of features than those described herein are possible without departing from the scope of the claimed invention.

## Claims

1. A method for forwarding a data packet in a meshed wireless communication network comprising nodes that are only permitted to transmit in accordance with a predetermined transmission schedule such that different sets of transmitter-receiver pairs are active in different time slots, the method comprising at a transmitting node having a set of packets queued for transmission:

   - for each packet of a subset of said set of packets, determining (2150) a cost function related to reaching a destination node of said respective packet for a plurality of candidate next hop nodes and next hop transmission slots;
   - assigning (2160) packets of said subset of packets to selected time slots and to respective next hop nodes in such a way that a utilization of the medium is maximized and a sum of said cost functions over said assigned packets is minimized; and
   - transmitting (2170) said packets in said subset of packets to said respective next hop nodes in said selected time slots.

2. The method according to claim 1, wherein said cost function represents the sum of the number of time slots required to reach said respective destination from said respective candidate next hop and the number of time slots that will pass before said packet can be transmitted to said candidate next hop.

3. A computer program product comprising code means which,when the program is executed by a processor, causes the processor to carry out the steps of the method according to any of the preceding claims.

4. A wireless network node configured to carry out the steps of the method according to any of claims 1 or 2.

## Patentansprüche

1. Verfahren zum Weiterleiten eines Datenpakets in einem vermaschten drahtlosen Kommunikationsnetzwerk, das Knoten umfasst, die nur gemäß einem vorbestimmten Übertragungsplan übertragen dürfen, derart, dass in verschiedenen Zeitschlitzen verschiedene Sätze von Sender-Empfänger-Paaren aktiv sind, wobei das Verfahren an einem Übertragungsknoten, an dem sich ein Satz von Paketen zur Übertragung in einer Warteschlange befinden, Folgendes umfasst:

   - für jedes Paket eines Untersatzes des Satzes von Paketen Bestimmen (2150) einer Kostenfunktion, die das Erreichen eines Zielknotens des jeweiligen Pakets betrifft, für eine Vielzahl von Next-Hop-Knotenkandidaten und Next-Hop-Übertragungsschlitzen;
   - Zuweisen (2160) von Paketen des Untersatzes von Paketen zu ausgewählten Zeitschlitzen und zu jeweiligen Next-Hop-Knoten in einer Weise, dass eine Nutzung des Mediums maximiert ist und eine Summe der Kostenfunktionen über die zugewiesenen Pakete minimiert ist; und
   - Übertragen (2170) der Pakete in den Untersätzen von Paketen zu den jeweiligen Next-Hop-Knoten in den ausgewählten Zeitschlitzen.

2. Verfahren nach Anspruch 1, wobei die Kostenfunktion die Summe der Anzahl von Zeitschlitzen, die erforderlich sind, um das jeweilige Ziel vom jeweiligen Next-Hop-Kandidaten zu erreichen, und der Anzahl von Zeitschlitzen, die durchlaufen, bevor das Paket zum Next-Hop-Kandidaten übertragen werden kann, repräsentiert.

3. Computerprogrammprodukt, das Codemittel umfasst, die, wenn das Programm von einem Prozessor ausgeführt wird, den Prozessor veranlassen, die Schritte des Verfahrens nach einem der vorhergehenden Ansprüche durchzuführen.

4. Drahtloser Netzwerkknoten, der dazu ausgelegt ist, die Schritte des Verfahrens nach einem der Ansprüche 1 oder 2 durchzuführen.

**Revendications**

1. Procédé pour expédier un paquet de données dans un réseau de communication maillé sans fil comprenant des nœuds qui sont seulement autorisés à émettre selon une planification d'émission prédéterminée de sorte que différents ensembles de couples d'émetteur-récepteur sont actifs dans des tranches de temps différentes, le procédé comprenant au niveau d'un nœud d'émission ayant un ensemble de paquets alignés pour émission :

   - pour chaque paquet d'un sous-ensemble dudit ensemble de paquets, la détermination (2150) d'une fonction de coût liée à l'atteinte d'un nœud de destination dudit paquet respectif pour une pluralité de nœuds candidats de saut suivant et de tranches d'émission de saut suivant ;
   - l'attribution (2160) de paquets dudit sous-ensemble de paquets à des tranches de temps sélectionnées et à des nœuds de saut suivant respectifs d'une telle façon qu'une utilisation du support est maximisée et qu'une somme desdites fonctions de coût sur lesdits paquets attribués est minimisée ; et
   - l'émission (2170) desdits paquets dans ledit sous-ensemble de paquets vers lesdits nœuds de saut suivant respectifs dans lesdites tranches de temps sélectionnées.

2. Procédé selon la revendication 1, dans lequel ladite fonction de coût représente la somme du nombre de tranches de temps exigées pour atteindre ladite destination respective à partir dudit saut suivant candidat respectif et du nombre de tranches de temps qui passeront avant que ledit paquet ne puisse être émis vers ledit saut candidat suivant.

3. Produit formant programme informatique comprenant un moyen formant code qui, lorsque le programme est exécuté par un processeur, amène le processeur à effectuer les étapes du procédé selon l'une quelconque des revendications précédentes.

4. Nœud de réseau sans fil configuré pour effectuer les étapes du procédé selon l'une quelconque des revendications 1 ou 2.

| transmit discovery signal | 1110 |

| listen for discovery signals to determine transmission slots | 1120 |

| transmit probe signal | 1130 |

| determine signal strength of received probe signals to obtain ranking | 1140 |

| exchange ranking information with peers to select next hop node according to ranking | 1150 |

| select packet based on destination criterion | 1160 |

| transmit selected packet to selected next hop | 1170 |

## Figure 1

```
┌─────────────────────────────────────────┐
│           transmit discovery signal       │  ∿ 1110
└─────────────────────────────────────────┘
                    │
                    ▼
┌─────────────────────────────────────────┐
│   listen for discovery signals to determine │  ∿ 1120
│           transmission slots               │
└─────────────────────────────────────────┘
                    │
                    ▼
┌─────────────────────────────────────────────────┐
│   ┌─────────────────────────────────────────┐   │
│   │         transmit probe signal            │ ∿ 1130
│   └─────────────────────────────────────────┘   │
│                    │                            │
│                    ▼                            │
│   ┌─────────────────────────────────────────┐   │
│   │  determine signal strength of received probe │ ∿ 1140
│   │   signals to obtain ranking and topology  │   │
│   └─────────────────────────────────────────┘   │
└─────────────────────────────────────────────────┘
                    │
                    ▼
┌─────────────────────────────────────────────────┐
│   ┌─────────────────────────────────────────┐   │
│   │  exchange ranking information with peers to │ ∿ 1150
│   │  select next hop node according to ranking │   │
│   └─────────────────────────────────────────┘   │
│                    │                            │
│                    ▼                            │
│   ┌─────────────────────────────────────────┐   │
│   │   select packet based on destination criterion │ ∿ 1160
│   └─────────────────────────────────────────┘   │
│                    │                            │
│                    ▼                            │
│   ┌─────────────────────────────────────────┐   │
│   │  transmit selected packet to selected next hop │ ∿ 1170
│   └─────────────────────────────────────────┘   │
└─────────────────────────────────────────────────┘
```

## Figure 2

# Figure 3

Signaling

PROBE | ID | DATA | ACK

Transmitted by Receivers    Transmitted by Transmitter

# Figure 4

| transmit discovery signal | $\sim$ 2110 |

| listen for discovery signals to determine transmission slots | $\sim$ 2120 |

| propagate queueing latency information | $\sim$ 2130 |

| derive routing table | $\sim$ 2140 |

| determine cost functions for packets queued for transmission | $\sim$ 2150 |

| assign packets in said subset to $M$ timeslots so as to minimize aggregate cost | $\sim$ 2160 |

| transmit said assigned packets to the selected next hops | $\sim$ 2170 |

Figure 5

Figure 6

Figure 7

**EP 3 379 865 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XINZHOU WU et al.** FlashLinQ: A Synchronous Distributed Scheduler for Peer-to-Peer Ad Hoc Networks. *Proceedings of the 48th Annual Allerton Conference on Communication, Control, and Computing,* October 2010